# EUROPÄISCHE PATENTSCHRIFT

(11) **EP 3 839 687 B1**
(45) Veröffentlichungstag und Bekanntmachung des Hinweises auf die Patenterteilung: **18.09.2024**
(21) Anmeldenummer: 20210336.2
(22) Anmeldetag: 27.11.2020
(51) Int. Cl.: G05D 1/00, G06Q 10/08

(54) **VERFAHREN ZUM BETREIBEN EINES AUTOMATISIERTEN FLURFÖRDERZEUGS SOWIE INTRALOGISTISCHES SYSTEM UND FLURFÖRDERZEUG ZUR DURCHFÜHRUNG DES VERFAHRENS**
METHOD OF OPERATING AN AUTOMATED INDUSTRIAL VEHICLE, AND INTRALOGISTICS SYSTEM AND INDUSTRIAL VEHICLE FOR CARRYING OUT THE METHOD
PROCÉDÉ D'EXPLOITATION D'UN CHARIOT DE MANUTENTION AUTOMATIQUE, SYSTÈME INTRALOGISTIQUE ET CHARIOT DE MANUTENTION POUR LA MISE EN OEUVRE DU PROCÉDÉ

(30) Priorität: 18.12.2019 DE 102019134910
(43) Veröffentlichungstag der Anmeldung: 23.06.2021
(73) Patentinhaber: STILL GmbH, 22113 Hamburg (DE)
(72) Erfinder: Krüger-Basjmeleh, Tino, 25469 Halstenbek (DE); Wittmann, Thomas, 21035 Hamburg (DE); Viereck, Volker, 23898 Kühsen (DE)
(74) Vertreter: Patentship Patentanwaltgesellschaft

(56) Entgegenhaltungen:
- WO-A1-2018/038206
- US-A1- 2014 058 556

## Beschreibung

Die Erfindung betrifft ein Verfahren zum Betreiben eines automatisierten Flurförderzeugs mit einer, eine Datenverarbeitungseinrichtung umfassenden, Steuerungseinrichtung zur automatischen Steuerung des Flurförderzeugs und einer mit der Datenverarbeitungseinrichtung in Wirkverbindung stehenden Sensoreinrichtung zur Erfassung externer Informationen in der Umgebung des Flurförderzeugs.

Ferner betrifft die Erfindung ein intralogistisches System sowie ein Flurförderzeug zur Durchführung des Verfahrens.

Unter einem intralogistischen System versteht man ein System, bei dem logistische Material- und Warenflüsse innerhalb eines Betriebsgeländes und somit innerbetrieblich abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

In der Intralogistik werden in jüngster Zeit häufig autonome Flurförderzeuge verwendet. Autonome Flurförderzeuge gehören zu den fahrerlosen Transportfahrzeugen. Unter fahrerlosen Transportfahrzeugen (FTF, englisch: Automated Guided Vehicle, AGV) versteht man flurgebundene Förderfahrzeuge mit eigenem Fahrantrieb, die automatisch gesteuert und berührungslos geführt werden.

So sind bereits autonome Flurförderzeuge im Einsatz, die sich fahrerlos durch Lagerhallen bewegen und selbsttätig Positionen zum Aufnehmen und Abgeben von Waren ansteuern.

Teil eines intralogistischen Systems kann beispielsweise das Kommissionieren sein, also das Zusammenstellen von Warenlieferungen in einem Warenlager. Unter Kommissionierung versteht man alle Methoden zur Zusammenstellung von bestimmten Objekten, insbesondere von Gütern in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Handelsgüter von autonom betriebenen Transportfahrzeugen von einer Quellposition aufgenommen und auf einer auf dem Fahrzeug transportierten Zielpalette abgesetzt. Insbesondere werden hierzu mobile Kommissionierroboter verwendet, die die Handelsgüter selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann beispielsweise als Adhäsionsgreifer oder Vakuumgreifer ausgebildet sein.

Anwendungen für automatisch und manuell geführte Flurförderzeuge sind heute bis auf wenige Ausnahmen getrennt. So existiert heute eine Vielzahl von spezialisierten Flurförderzeugen für den dedizierten automatischen oder manuellen Einsatz im Logistikumfeld. Daneben existieren Flurförderzeuge, die durch die Fähigkeit zur Abbildung vollautomatisierter Funktionen und funktionsfähiger manueller Bedienstände sowohl manuell als auch automatisch eingesetzt werden können. Mit derartigen Flurförderzeugen wurden erstmals klassisch getrennte Themenfelder, nämlich Automatisierung und manueller Transport, vereint, so dass manuelle und automatisierte Prozessabläufe im Rahmen der Kommissionierung von Stückgut fließend ineinander übergehen.

Außerdem existieren Assistenzsysteme im manuell geführten Flurförderzeugbereich, die Prozessabläufe unterstützen, indem die Warenaufnahme oder -abgabe beschleunigt wird (beispielsweise durch eine Mastsenkrechtstellung oder eine aktive Laststabilisierung) und das Betreiben von Flurförderzeugen abgesichert oder ergonomisch aufgewertet wird (beispielsweise durch Gabelzinkenkameras). Diese Assistenzsysteme dienen bisher immer dem Fahrer eines Flurförderzeuges direkt, um die Zusammenarbeit zwischen Mensch und Maschine zu unterstützen, erfordern jedoch einen direkten Eingriff vom Menschen.

Auf diesen Stand der Technik aufbauend beschreibt die DE 10 2018 109 300 A1 ein Verfahren zur Steuerung einer Kleinfunktionalität eines Flurförderzeugs mittels eines Makroprogrammes. Dabei geht es darum, Kleinfunktionalitäten mit Flurförderzeugen in Verbindung mit geeigneten manuellen Bedienständen vollautomatisiert abzubilden. Hierzu wird vorgeschlagen, vortrainierte Fähigkeiten oder eigens geteachte Fähigkeiten abrufbar zu gestalten und diese Fähigkeiten ereignisorientiert, beispielsweise durch Knopfdruck, abrufen zu können.

Die Überführung von klassisch manuellen, so genannten A/B-Transporten, wie die Fahrt zur Palettenaufnahme, die Palettenaufnahme, die Fahrt zu Palettenabgabe und die Palettenabgabe, sowie die zugehörigen Unteraufgaben, wie die Fahrt zu einer Wartestation und Leerfahrten, in die vollautomatisierte Bearbeitung ist bisher mit großen organisatorischen und damit auch finanziellen Aufwänden verbunden. So müssen Fahrwege angelegt und konfiguriert, Navigationskarten erstellt und Aufnahme- und Abgabeorte der Palette eingelernt werden. Die Planung von automatisierten Neuanlagen mit vollautomatischen Flurförderzeugen umfasst in der Regel mindestens folgende Parameter:
- Konfiguration der Ladehilfsmittel typischer Ladung und Befestigung,
- Layout mit den Quellen und Senken der Transporte,
- aufkommendes Transportvolumen,
- Anbindung der zur Verfügung stehenden Auftragssteuerung,
- Planungen der Fahrwege mit den damit verbundenen Auf- und Abgabestellen,
- Anbindung der Transportauftragserstellung und
- Verkehrsregelung (abhängig vom Transportaufkommen).

Die Art und Komplexität der Aufgabe (Hochregal, ausschließlich bodenebene Plätze etc.) beeinflusst dabei im Wesentlichen nicht die organisatorischen Aufwände zur Erstellung neuer vollautomatisierter Anlagen. Maßgeblicher Faktor zur Bemessung der Konfigurationsaufwände ist die Stellplatzanzahl, untergeordnet aber nicht vernachlässigbar ist die Anzahl der beteiligten Flurförderzeuge, die Peripherie und die Anbindung überlagerter Warenmanagementsysteme ebenso planungsentscheidend.

Insbesondere stellen sich vollautomatisierten Anlagen mit vollautomatischen Flurförderzeugen folgende Probleme:
- Bei infrastrukturellen Änderungen am erstellten Layout fallen die zuvor getätigten layoutbezogenen Aufgaben erneut an. Diese Aufgaben können bisher nur speziell ausgebildete spezialisierte Benutzergruppen (meist Applikationsingenieure oder -techniker) erledigen.
- Benutzerseitige Tests von Automatisierungsaufgaben sind immer mit hohen Einmaleinrichtaufwänden verbunden.
- Die begrenzte Anzahl an Spezialisten zur Einrichtung automatisierter Flurförderzeuge führt zu einer künstlichen Begrenzung verfügbarer Anlagen, da alle aktuell verfügbaren Automatisierungsanlagen Spezialisten und deren KnowHow bedürfen.
- Automatisierte Flurförderzeuge werden bisher ausschließlich durch Transportleitsteuerungen (auf dem Flurförderzeug befindlich oder in zentraler Infrastruktur) realisiert. Dies setzt voraus, dass der gesamte Auftrag dezentral oder zentral in seiner Ausprägung beschrieben werden kann. Folglich müssen alle Informationen zur Bearbeitung des Auftrages vorab zur Verfügung stehen, weshalb eine Konfiguration vorab notwendig ist. Änderungen, welche zur Lebenszeit der Automatisierungsanlage entstehen, müssen nachträglich in bestehende Systeme eingepflegt werden. Auch hierfür ist Spezialwissen nötig.
- Eine Aufgabenteilung "Erst ich (Bediener) ein Stück, dann Du - Roboter" in Form einer Trennung der Transportaufgabe nach Komplexitäts- oder Individualisierungsgrad, wobei zum Beispiel der Mensch den komplexen Part übernimmt, beispielsweise die Zuführung individueller Ware beispielsweise durch einen Griff in ein Regal, und der Roboter reine Transportaufgaben (AlB-Transport) übernimmt, existiert bisher nicht. Transportaufgaben werden nach dem Stand der Technik entweder automatisiert oder manuell verrichtet.
- Eine Zusammenarbeit zwischen Mensch und Maschine in Form von gemeinsamen Arbeitsbereichen (Mischbetrieb / Brown-Field Applications) ist zwar prinzipiell möglich, aber aktuell nur sehr vereinzelnd anzutreffen.

Aus der WO 2018/038206 A1 ist ein autonomes Fahrsystem bekannt, das eine autonome Fahrvorrichtung, eine Fahrführungslinie, die entlang einer Fahrstrecke angeordnet ist, die die autonome Fahrvorrichtung passiert, und entlang der Fahrtroute angeordnete Markierungen umfasst. Betriebssteuerinformationen für die autonome Fahrvorrichtung sind in lesbarer Weise in der Markierung aufgezeichnet.

Aus der US 2014/058556 A1 ist ein Verfahren zum Steuern einer mobilen Antriebseinheit bekannt, bei dem von der mobilen Antriebseinheit eine aktive Markierung erfasst wird. Die mobile Antriebseinheit ist ein selbstangetriebenes Robotergerät, das so konfiguriert ist, dass es sich als Reaktion auf Anweisungen, die von der aktiven Markierung empfangen werden, unabhängig in einem Arbeitsbereich bewegt.

Der vorliegenden Erfindung liegt die Aufgabe zugrunde, ein Verfahren der eingangs genannten Art sowie ein intralogistisches System und ein Flurförderzeug zur Durchführung des Verfahrens so auszugestalten, dass ein Einsatz automatisierter Flurförderzeuge auch ohne großen Investitionsaufwand in die betriebliche Infrastruktur des Einsatzortes ermöglicht wird.

Diese Aufgabe wird erfindungsgemäß verfahrensseitig dadurch gelöst, dass einerseits mittels mindestens eines externen Signalgebers in der Umgebung des Flurförderzeugs Informationen zur Verfügung gestellt werden, die mindestens einen Auftrag für das Flurförderzeug enthalten, welcher mindestens eine komplexe Befehlskette zur Steuerung des Flurförderzeugs umfasst, und andererseits die den Auftrag enthaltenden Informationen durch die Sensoreinrichtung des Flurförderzeugs erfasst und an die Datenverarbeitungseinrichtung weitergegeben werden, wobei in der Datenverarbeitungseinrichtung der Auftrag aus den erfassten Informationen extrahiert und in ein Steuerungsprogramm eingelesen wird, und durch das Steuerungsprogramm die Befehlskette zur Steuerung des Flurförderzeugs gestartet wird, wobei mehrere komplexe Befehlsketten vorgesehen werden, die einzelne Handlungsstränge des automatisierten Flurförderzeugs abbilden und eine Bahnverfolgung, eine Palettenaufnahme, und eine Palettenabgabe umfassen.

Wesenspunkt der Erfindung ist die Realisierung von Automatisierungsanlagen durch eine neue Art der Abarbeitung von komplexen Befehlsketten in automatisierten Flurförderzeugen, die als Orchestrierung von komplexen Befehlsketten bezeichnet werden kann. Dabei stellen komplexe Befehlsketten Grundfertigkeiten dar, die einzelne typische Handlungsstränge automatisierter Flurförderzeuge abbilden. Hierzu gehören zum Beispiel Grundfunktionen (Automatisierungsgrundfunktionen) wie die Bahnverfolgung, die Palettenaufnahme, und die Palettenabgabe, das Abbiegen oder auch Makrofunktionen gemäß der DE 10 2018 109 300 A1. Die Fertigkeiten der automatisierten Flurförderzeuge werden dabei nicht durch vorkonfigurierte Verhaltensmuster erzeugt, sondern durch gezielte Orchestrierung von komplexen Befehlsketten. Dabei erfolgt die Orchestrierung durch externe sensorische Wahrnehmung der Befehlsketten, beispielsweise durch die externe sensorische Wahrnehmung der nächsten Befehlsketten nach erfolgreicher Abarbeitung der aktuellen (zuvor) beauftragten Befehlskette. Zur Umsetzung eines AlB-Transportes (Aufgabe) mit dem automatisierten Flurförderzeug durch eine externe Orchestrierung von Funktionen stellen die folgenden Funktionen die Mindestanforderung dar:
- automatische Palettenaufnahme,
- automatische Palettenabgabe,
- automatische Bahnverfolgung,
- Informations-/Befehlserkennung- und aufnahme
- automatische Orchestrierungsplanung.

Es versteht sich, dass einfachere Aufgaben mit dem automatisierten Flurförderzeug nur Untermengen der genannten Funktionen benötigen können.

Bei der Erfindung werden mittels eines externen Signalgebers Informationen zur Verfügung gestellt, die mindestens einen Auftrag für das Flurförderzeug enthalten, welcher mindestens eine komplexe Befehlskette zur Steuerung des Flurförderzeugs umfasst. Im nicht erfindungsgemäßen Fall kann als Signalgeber ein Schild dienen, das zusätzlich eine maschinenlesbare Markierung aufweisen kann, welche die Informationen beinhaltet. Der Signalgeber kann in der Betriebsumgebung des Flurförderzeugs positioniert werden, um dem Flurförderzeug ortsbezogene Anweisungen zu geben. Beispielsweise kann es sich dabei um den Auftrag handeln, einen Abbiegevorgang oder einen Beladevorgang einzuleiten. Über die fahrzeugeigene Sensoreinrichtung werden diese Informationen erfasst und an die Steuerungseinrichtung des Flurförderzeugs weitergeleitet. In der zur Steuerungseinrichtung gehörenden Datenverarbeitungseinrichtung wird aus den Informationen der Auftrag extrahiert und in ein Steuerungsprogramm eingelesen. Durch das Steuerungsprogramm kann dann die Befehlskette zur Steuerung des Flurförderzeugs gestartet werden, also beispielsweise der Abbiegevorgang oder der Beladevorgang eingeleitet werden.

Auf diese Weise wird eine Automatisierung von Betrieben möglich, ohne dass hohe Investitionen in eine zentrale Infrastruktur erforderlich sind. Es müssen keine Fahrwege angelegt und konfiguriert, Navigationskarten erstellt und Aufnahme- und Abgabeorte eingelernt werden. Auch Anpassungen an bauliche Veränderungen sind ohne großen Aufwand möglich. Beispielsweise muss der externe Signalgeber lediglich an einer anderen Stelle positioniert werden.

Grundsätzlich wird dabei zwischen Aufträgen mit endlosen Befehlsketten und Aufträgen mit abschließbaren Befehlsketten unterschieden. Abschließbare komplexe Befehlsketten stellen endliche organisatorische Aufgabenteile wie zum Beispiel die Palettenaufnahme und die Palettenabgabe dar, die selbstständig eine vollständige Bearbeitung feststellen können. Endlose komplexe Befehlsketten können das Ende des Auftrags nicht automatisch erkennen, müssen daher durch einen externen Trigger das Ende aufgeprägt bekommen. Beispiele für eine endlose komplexe Befehlskette sind Bahnverfolgungen und eine Warteaufforderungen.

Bei einer abschließbaren Befehlskette, die Palettenaufnahme und die Palettenabgabe umfasst, erfolgt bevorzugt eine selbständige Verarbeitung der Befehlskette bis zu ihrem Ende.

Bei einer endlosen Befehlskette, die die Bahnverfolgung umfasst, erfolgt vorteilhafterweise eine Beendigung der Verarbeitung der Befehlskette mittels Aufprägung eines externen Signals.

Nach Beendigung der Verarbeitung der Befehlskette wird erfindungsgemäß ein nachfolgender Auftrag eingelesen. Nicht erfindungsgemäß wird bei Vorliegen eines neuen Auftrags auch der vorherige Auftrag abgebrochen und die Befehlskette des neuen Auftrags gestartet. Dies ist insbesondere bei endlosen Befehlsketten von Vorteil. In diesem Fall wird die Beendigung der Verarbeitung der Befehlskette mittels Aufprägung des externen Signals der neuen Befehlskette bewirkt.

Zweckmäßigerweise stellt der externe Signalgeber optische Informationen zur Verfügung. Eine optische Signalübertragung kann im nicht erfindungsgemäßen Fall durch ein Schild mit einer maschinenlesbaren Markierung erfolgen, die von der Sensoreinrichtung des Flurförderzeugs, zum Beispiel einer Kamera, gelesen werden kann. Die Markierung kann beispielsweise codierte Informationen enthalten, die einen Auftrag für das Flurförderzeug mit komplexen Befehlsketten betreffen. Eine nicht erfindungsgemäße akustische Signalübertragung kann durch Schallwellen erfolgen, die beispielsweise von einem Lautsprecher erzeugt und von einem Mikrofon als Sensoreinrichtung empfangen werden. Unter nicht erfindungsgemäße radiobasierte Signalübertragungen fallen insbesondere Funkübertragungen wie zum Beispiel WLAN- und Bluetooth-Übertragungen.

Nicht erfindungsgemäß kann als externer Signalgeber ein Schild verwendet werden, das eine maschinenlesbare Markierung aufweist, welche die Informationen beinhaltet. Dadurch wird eine Verbesserung der menschlichen Einflussnahmemöglichkeit erzielt.

Erfindungsgemäß ist vorgesehen, dass der externe Signalgeber zentral gesteuert wird. Insbesondere können hierzu elektronische Bildschirme verwendet werden, die von einem Leitsystem, beispielsweise einem Flurförderzeug-Leitsystem oder einem Warenmanagementsystem, zentral gesteuert werden. Somit können flexibel situationsgerechte Befehlsketten erzeugt werden, mit denen zum Beispiel Wartepositionen und Einlagerorte dem Flurförderzeug variabel vorgegeben werden können.

Die Erfindung betrifft ferner ein intralogistisches System mit mindestens einem automatisierten Flurförderzeug mit einer, eine Datenverarbeitungseinrichtung umfassenden, zur automatischen Steuerung des Flurförderzeugs ausgebildeten, Steuerungseinrichtung und einer mit der Datenverarbeitungseinrichtung in Wirkverbindung stehenden, zur Erfassung externer Informationen in der Umgebung des Flurförderzeugs ausgebildeten, Sensoreinrichtung, und mindestens einem externen Signalgeber in der Umgebung des Flurförderzeugs.

Bei dem intralogistischen System wird die gestellte Aufgabe dadurch gelöst, dass der externe Signalgeber dazu eingerichtet ist, Informationen zur Verfügung zu stellen, die mindestens einen Auftrag für das Flurförderzeug enthalten, welcher mindestens eine komplexe Befehlskette zur Steuerung des Flurförderzeugs umfasst, und die Datenverarbeitungseinrichtung der Steuerungseinrichtung dazu eingerichtet ist, den Auftrag aus den von der Sensoreinrichtung erfassten Informationen zu extrahieren, den Auftrag in ein Steuerungsprogramm einzulesen und die Befehlskette zur Steuerung des Flurförderzeugs zu starten, wobei mehrere komplexe Befehlsketten vorgesehen sind, die einzelne Handlungsstränge des automatisierten Flurförderzeugs abbilden und eine Bahnverfolgung, eine Palettenaufnahme, und eine Palettenabgabe umfassen.

Vorzugsweise sind der externe Signalgeber als optischer Signalgeber und die Sensoreinrichtung als optischer Sensor, insbesondere als Kamera oder Infrarotsensor oder Laserscanner, ausgebildet. Dabei kann als Kamera eine 2D-Kamera oder 3D-Kamera oder eine ToF-(Time of Flight)-Kamera verwendet werden, um auch komplexe Strukturen und die darin hinterlegten Informationen erfassen zu können.

Im nicht erfindungsgemäßen Fall kann der optische Signalgeber als Schild mit einer maschinenlesbaren Markierung, insbesondere einem ArUco-Marker, ausgebildet sein. ArUco-Marker bestehen aus 7 mal 7 Pixeln. Da die äußeren Reihen/Spalten immer schwarz gefärbt sind, bleiben nur die inneren 5 mal 5 Pixel zur Darstellung. Somit können mit sehr geringem Aufwand auch Betriebe automatisiert werden, in denen zum Beispiel keine elektronische Infrastruktur mit Funkleitsystemen zur Verfügung steht. Es genügt das Aufstellen entsprechender Schilder, um dem automatisierten Flurförderzeug entsprechende Aufträge mit komplexen Befehlsketten zu übermitteln.

Zur Verbesserung der menschlichen Einflussmöglichkeit ist das nicht erfindungsgemäße Schild vorteilhafterweise zusätzlich mit mindestens einem für Menschen lesbaren Zeichen und/oder mindestens einer für Menschen lesbaren Beschriftung versehen.

Eine nicht erfindungsgemäße Variante sieht vor, dass der externe Signalgeber als akustischer Signalgeber, insbesondere als Lautsprecher oder Ultraschallsender, und die Sensoreinrichtung als akustischer Signalempfänger, insbesondere als Mikrofon oder Ultraschallsensor, ausgebildet sind.

In einer nicht erfindungsgemäßen Ausgestaltung sind der externe Signalgeber als radiobasierter Signalgeber, insbesondere als WLAN-(Wireless LAN)-, Bluetooth-, NFC-(Near Field Communication)-, UWB-(Ultra Wide Band)- oder LoRaWAN- (Long Range Wide Area Network)- Sender, und die Sensoreinrichtung als radiobasierter Empfänger, insbesondere als WLAN-, Bluetooth-, NFC-, UWB- oder LoRaWAN-Empfänger ausgebildet.

Nicht erfindungsgemäß sind auch Kombinationen der genannten Signalübertragungswege denkbar.

Gemäß einer Weiterbildung des Erfindungsgedankens ist vorgesehen, dass der externe Signalgeber als intelligenter Signalgenerator, insbesondere als elektronischer Bildschirm zur optischen Signalübertragung, ausgebildet ist, der mit einem zentralen Steuerungssystem, insbesondere einem Flurförderzeug-Leitsystem und/oder einem Warenmanagementsystem, in Wirkverbindung steht. Somit können flexibel situationsgerechte Befehlsketten erzeugt werden, mit denen zum Beispiel Wartepositionen und Einlagerorte dem Flurförderzeug variabel vorgegeben werden können.

Die Erfindung betrifft außerdem ein Flurförderzeug mit einer, eine Datenverarbeitungseinrichtung umfassenden, zur automatischen Steuerung des Flurförderzeugs ausgebildeten, Steuerungseinrichtung und einer mit der Datenverarbeitungseinrichtung in Wirkverbindung stehenden, zur Erfassung externer Informationen in der Umgebung des Flurförderzeugs ausgebildeten, Sensoreinrichtung zur Durchführung des Verfahrens.

Beim Flurförderzeug wird die gestellte Aufgabe dadurch gelöst, dass die Datenverarbeitungseinrichtung der Steuerungseinrichtung dazu eingerichtet ist, aus den von der Sensoreinrichtung erfassten Informationen einen, eine komplexe Befehlskette zur Steuerung des Flurförderzeugs umfassenden, Auftrag zu extrahieren, den Auftrag in ein Steuerungsprogramm einzulesen und die Befehlskette zur Steuerung des Flurförderzeugs zu starten, wobei mehrere komplexe Befehlsketten vorgesehen sind, die einzelne Handlungsstränge des automatisierten Flurförderzeugs abbilden und eine Bahnverfolgung, eine Palettenaufnahme, und eine Palettenabgabe umfassen.

Bevorzugt ist das Flurförderzeug als Gabelstapler oder Kommissionierfahrzeug, insbesondere als mobiler Kommissionierroboter, oder Schlepper oder Plattformwagen oder Routenzug-Fahrzeug ausgebildet.

Die Erfindung bietet eine ganze Reihe von Vorteilen:
- Die Konfigurationen und individuelle Ausprägungen während der Einrichtung des Automatisierungssystems können benutzer- und bedarfsgerecht auf einfache Weise abgeändert werden.
- Die Ausprägungsart der Aufgabenabarbeitung (zum Beispiel die Pfadnutzung) während des Betriebs kann bedarfsgerecht individuell geändert werden.
- Die Erfindung ermöglicht eine erhebliche Reduzierung des notwenigen Knowhows zur Inbetriebnahme von Automatisierungsanlagen.
- Es besteht kein Bedarf mehr an Spezialisten zur Einrichtung des automatisierten Systems. Die Anwender können das System selbst einrichten und können daher entkoppelt von den herstellerseitigen Einrichtungsspezialisten arbeiten.
- Eine dezentrale Ausgestaltung der Systemkonfiguration wird ermöglicht. Es ist kein übergeordnetes Staplerleitsystem nötig. Sämtliches Wissen zur Auftragsabarbeitung steckt in der Infrastruktur (Signalgeber).
- Eine Aufgabenteilung zwischen Mensch und Maschine in Form einer Trennung der Transportaufgaben nach Komplexitäts- oder Individualisierungsgrad kann leicht realisiert werden.
- Eine Abhängigkeit von bereits existierenden Warenmanagementsystemen entfällt.
- Eine Zusammenarbeit zwischen Mensch und Maschine, beispielsweise indem ein automatisiertes Flurförderzeug den automatisierten Zutransport und Abtransport von Paletten ausführt und ein Mensch dazwischen Waren auf die Palette kommissioniert, kann menschzentriert gesteuert werden, wodurch eine optimale Zusammenarbeit zwischen Mensch und Maschine erzielt wird.

Weitere Vorteile und Einzelheiten der Erfindung werden anhand der in den schematischen Figuren dargestellten Ausführungsbeispiele näher erläutert. Hierbei zeigen
- Figur 1: ein Ablaufschema zur Verarbeitung einer Befehlskette und
- Figur 2: das automatisierte Flurförderzeug bei der Bahnverfolgung.

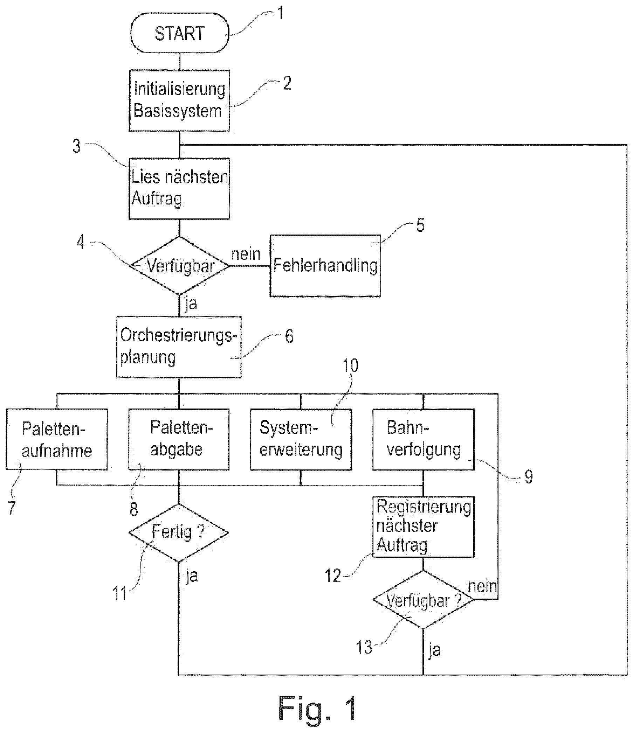

In der Figur 1 ist ein Ablaufschema zur Verarbeitung einer einen entsprechenden Auftrag für ein Flurförderzeug enthaltenden Befehlskette durch die Datenverarbeitungseinrichtung des automatisierten Flurförderzeugs dargestellt. Nach dem Start 1 und einer anschließenden Initialisierungsphase 2 des Gesamtsystems ist das System betriebsbereit und beginnt mit dem Schritt 3 "Lies nächsten Auftrag", den nächsten Befehl/Auftrag sensorisch extern wahrzunehmen. Dazu nutzt das Flurförderzeug seine bordeigene Sensorik, um einen nachfolgenden komplexen Befehl/Auftrag einzulesen. Nach dem Lesen eines neuen Befehls/Auftrags wird im Schritt 4 abgefragt, ob die dem Auftrag entsprechende Befehlskette im Steuerungsprogramm der Datenverarbeitungseinrichtung des Flurförderzeugs verfügbar ist, also der Auftrag ausführbar ist. Falls die Befehlskette nicht verfügbar ist, erfolgt eine Fehlerbehandlung 5. Falls die Befehlskette verfügbar ist, erfolgt im Schritt 6 die Orchestrierungsplanung, also die Ausführungsplanung zur Abarbeitung der zu dem Auftrag gehörenden komplexen Befehlskette. Dazu wird, wenn nötig, die zuvor laufende Befehlskette des komplexen Auftrags abgebrochen und die neue, dem aktuellen Auftrag entsprechende komplexe Befehlskette gestartet.

Im vorliegenden Beispiel umfassen die komplexen Befehlsketten die Aufgaben Palettenaufnahme 7, Palettenabgabe 8 und Bahnverfolgung 9. Das System ist über den Schritt Systemerweiterung 10 beliebig erweiterbar, so dass zusätzliche Dienste, welche beispielsweise auf Makros oder neuen komplexen Befehlsketten basieren, zum Beispiel ein Abbiegen nach links oder rechts des Flurförderzeugs, nahtlos in das System integrierbar sind. Solche zusätzlichen Befehlsketten können im Schritt 12 registriert werden. Im nachfolgenden Schritt 13 kann dann abgefragt werden, ob die zusätzlichen Befehlsketten im Steuerungsprogramm der Datenverarbeitungseinrichtung des Flurförderzeugs verfügbar sind. Wenn dies nicht der Fall ist, kehrt das System zu den Schritten 7, 8, 9, 10 zurück.

Nach Beendigung 11 der aktuellen Befehlskette kehrt das System zum Schritt 3 "Lies nächsten Auftrag" zurück, so dass das System über das Einlesen eines neuen Auftrags und somit einer neuen Befehlskette erneut in die Orchestrierung einer weiteren komplexen Befehlskette eintritt, wodurch sich eine Endlosschleife ergibt.

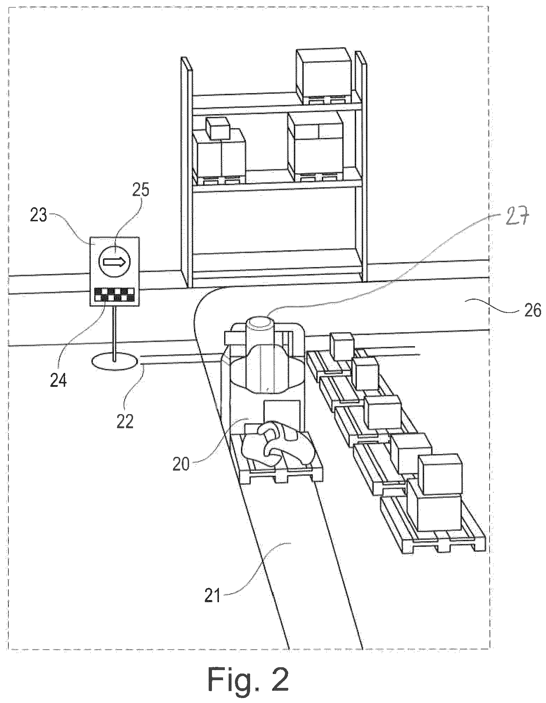

Die Figur 2 zeigt ein erfindungsgemäßes automatisiertes Flurförderzeug 20 bei der komplexen Befehlskette Bahnverfolgung. Das Flurförderzeug 20 fährt vollautomatisch auf der Bahn 21 bis zu einer virtuellen Grenze, die in der Figur 2 durch eine Doppellinie 22 veranschaulicht ist. Die Doppellinie 22 markiert den Erkennungsbereich der neuen Befehlskette.

An der virtuellen Grenze erkennt das Flurförderzeug 20 durch die Registrierung eines neuen Befehls/Auftrags zunächst das Ende der aktuellen Befehlskette Bahnverfolgung. Die Registrierung des nächsten Befehls/Auftrags erfolgt durch das Einlesen des vor dem Flurförderzeug 20 befindlichen neuen komplexen Auftrags mit Hilfe seiner sensorischen Wahrnehmung des Umfeldes mittels der, beispielsweise als Kamera ausgebildeten, Sensoreinrichtung 27 des Flurförderzeugs 20 und Extraktion des Befehls/Auftrags aus der Umgebung. In der hier dargestellten nur beispielhaften Variante erfolgt das Einlesen des nächsten Auftrags durch die optische Wahrnehmung des nächsten Auftrages mit Hilfe des als nicht erfindungsgemäßes Schild ausgebildeten Signalgebers 23. Auf dem nicht erfindungsgemäßen Schild ist im dargestellten Ausführungsbeispiel ein ArUco-Marker 24 angebracht, der die neue Befehlskette/Auftrag in codierter Form enthält. Zur Verbesserung der menschlichen Einflussnahmemöglichkeit ist das nicht erfindungsgemäße Schild 23 noch mit einem menschenlesbaren Zeichen 25, nämlich einem Abbiegepfeil, versehen. Nach der Erkennung des kommenden Auftrags, wird die Orchestrierung erneut angestoßen und eine Abbiegung auf die Bahn 26 inszeniert, welche eine Erweiterung des Systems durch ein Systemmakro oder eine neue komplexe Befehlskette, die ein Abbiegen in eine definierte Richtung betrifft, gemäß der Systemerweiterung 10 in der Figur 1 darstellt.

Über weiter folgende, nicht explizit dargestellte, Schritte können so beliebige komplexe Szenarien automatisiert abgebildet werden, wobei das Automatisierungssystem (Flurförderzeug 20) nur Kenntnis seines aktuellen Auftrages zur Abarbeitung der komplexen Befehlskette besitzt. Die Abarbeitung des nächsten Auftrages erfolgt jeweils durch, verallgemeinert ausgedrückt, extern aufgeprägte Signale an individuell bestimmbaren Triggerpunkten, beispielsweise entsprechende Aufträge enthaltende Schilder.

Mit der Erfindung wird somit eine benutzer- bzw. anwenderzentrierte Orchestrierung von Automatisierungsgrundfunktionen zur Realisierung vollautomatischer Transporte ermöglicht.

## Patentansprüche

1. Verfahren zum Betreiben eines automatisierten Flurförderzeugs (20) mit einer, eine Datenverarbeitungseinrichtung umfassenden, Steuerungseinrichtung zur automatischen Steuerung des Flurförderzeugs (20) und einer mit der Datenverarbeitungseinrichtung in Wirkverbindung stehenden Sensoreinrichtung (27) zur Erfassung externer Informationen in der Umgebung des Flurförderzeugs (20), wobei die Sensoreinrichtung (27) als optischer Sensor ausgebildet ist, **dadurch gekennzeichnet, dass** einerseits mittels mindestens eines externen Signalgebers (23) in der Umgebung des Flurförderzeugs (20) Informationen zur Verfügung gestellt werden, die mindestens einen Auftrag für das Flurförderzeug (20) enthalten, welcher mindestens eine komplexe Befehlskette zur Steuerung des Flurförderzeugs (20) umfasst, und andererseits die den Auftrag enthaltenden Informationen durch die Sensoreinrichtung (27) des Flurförderzeugs (20) erfasst und an die Datenverarbeitungseinrichtung weitergegeben werden, wobei in der Datenverarbeitungseinrichtung der Auftrag aus den erfassten Informationen extrahiert und in ein Steuerungsprogramm eingelesen wird, und durch das Steuerungsprogramm die Befehlskette zur Steuerung des Flurförderzeugs (20) gestartet wird, wobei mehrere komplexe Befehlsketten vorgesehen werden, die einzelne Handlungsstränge des automatisierten Flurförderzeugs (20) abbilden und eine Bahnverfolgung (9), eine Palettenaufnahme (7), und eine Palettenabgabe (8) sind, wobei der externe Signalgeber (23) als optischer Signalgeber (23) ausgebildet ist, wobei der externe Signalgeber (23) zentral gesteuert wird, wobei nach Beendigung der Verarbeitung der Befehlskette ein nachfolgender Auftrag eingelesen wird.

2. Verfahren nach Anspruch 1, **dadurch gekennzeichnet, dass** bei einer abschließbaren Befehlskette, die die Palettenaufnahme (7) oder die Palettenabgabe (8) umfasst, eine selbständige Verarbeitung der Befehlskette bis zu ihrem Ende erfolgt.

3. Verfahren nach Anspruch 1 oder 2, **dadurch gekennzeichnet, dass** bei einer endlosen Befehlskette, die die Bahnverfolgung (9) umfasst, eine Beendigung der Verarbeitung der Befehlskette mittels Aufprägung eines externen Signals erfolgt.

4. Verfahren nach einem der Ansprüche 1 bis 3, **dadurch gekennzeichnet, dass** der externe Signalgeber (23) optische Informationen zur Verfügung stellt.

5. Flurförderzeug (20) mit einer, eine Datenverarbeitungseinrichtung umfassenden, zur automatischen Steuerung des Flurförderzeugs (20) ausgebildeten, Steuerungseinrichtung und einer mit der Datenverarbeitungseinrichtung in Wirkverbindung stehenden, zur Erfassung externer Informationen in der Umgebung des Flurförderzeugs (20) ausgebildeten, Sensoreinrichtung (27) zur Durchführung eines Verfahrens nach einem der Ansprüche 1 bis 4, wobei die Sensoreinrichtung (27) als optischer Sensor ausgebildet ist, **dadurch gekennzeichnet, dass** die Datenverarbeitungseinrichtung der Steuerungseinrichtung dazu eingerichtet ist, aus den von der Sensoreinrichtung (27) erfassten Informationen einen, eine komplexe Befehlskette zur Steuerung des Flurförderzeugs (20) umfassenden, Auftrag zu extrahieren, den Auftrag in ein Steuerungsprogramm einzulesen und die Befehlskette zur Steuerung des Flurförderzeugs (20) zu starten, wobei mehrere komplexe Befehlsketten vorgesehen sind, die einzelne Handlungsstränge des automatisierten Flurförderzeugs (20) abbilden und eine Bahnverfolgung (9), eine Palettenaufnahme (7), und eine Palettenabgabe (8) sind, wobei der externe Signalgeber (23) als optischer Signalgeber (23) ausgebildet ist, wobei der externe Signalgeber (23) zentral gesteuert wird.

6. Flurförderzeug (20) nach Anspruch 5, **dadurch gekennzeichnet, dass** das Flurförderzeug (20) als Gabelstapler oder Kommissionierfahrzeug, insbesondere als mobiler Kommissionierroboter, oder Schlepper oder Plattformwagen oder Routenzug-Fahrzeug ausgebildet ist.

7. Intralogistisches System mit mindestens einem automatisierten Flurförderzeug (20) nach Anspruch 5 oder 6 mit einer, eine Datenverarbeitungseinrichtung umfassenden, zur automatischen Steuerung des Flurförderzeugs (20) ausgebildeten, Steuerungseinrichtung und einer mit der
Datenverarbeitungseinrichtung in Wirkverbindung stehenden, zur Erfassung externer Informationen in der Umgebung des Flurförderzeugs (20) ausgebildeten, Sensoreinrichtung (27), wobei die Sensoreinrichtung (27) als optischer Sensor ausgebildet ist, und mindestens einem externen Signalgeber (23) in der Umgebung des Flurförderzeugs (20), wobei der externe Signalgeber (23) als optischer Signalgeber (23) ausgebildet ist, **dadurch gekennzeichnet, dass** der externe Signalgeber (23) dazu eingerichtet ist, Informationen zur Verfügung zu stellen, die mindestens einen Auftrag für das Flurförderzeug (20) enthalten, welcher mindestens eine komplexe Befehlskette zur Steuerung des Flurförderzeugs (20) umfasst, und die Datenverarbeitungseinrichtung der Steuerungseinrichtung dazu eingerichtet ist, den Auftrag aus den von der Sensoreinrichtung (27) erfassten Informationen zu extrahieren, den Auftrag in ein Steuerungsprogramm einzulesen und die Befehlskette zur Steuerung des Flurförderzeugs (20) zu starten, wobei mehrere komplexe Befehlsketten vorgesehen sind, die einzelne Handlungsstränge des automatisierten Flurförderzeugs (20) abbilden und eine Bahnverfolgung (9), eine Palettenaufnahme (7), und eine Palettenabgabe (8) sind, wobei der externe Signalgeber (23) zentral gesteuert wird, wobei das Steuerungsprogramm ausgebildet ist, nach Beendigung der Verarbeitung der Befehlskette ein nachfolgenden Auftrag einzulesen.

8. Intralogistisches System nach Anspruch 7, **dadurch gekennzeichnet, dass** die Sensoreinrichtung (27) als Kamera oder Infrarotsensor oder Laserscanner ausgebildet sind.

9. Intralogistisches System nach Anspruch 8, **dadurch gekennzeichnet, dass** der optische Signalgeber (23) als Schild mit einem ArUco-Marker (24) ausgebildet ist.

10. Intralogistisches System nach einem der Ansprüche 7 bis 9, **dadurch gekennzeichnet, dass** der externe Signalgeber (23) als intelligenter Signalgenerator, insbesondere als elektronischer Bildschirm, ausgebildet ist, der mit einem zentralen Steuerungssystem, insbesondere einem Flurförderzeug-Leitsystem und/oder einem Warenmanagementsystem, in Wirkverbindung steht.

## Claims

1. Method for operating an automated industrial truck (20) having a control device, comprising a data processing device, for the automatic control of the industrial truck (20) and a sensor device (27), which is operationally connected to the data processing device, for acquiring external items of information in the surroundings of the industrial truck (20), wherein the sensor device (27) is configured as an optical sensor, **characterized in that**, on the one hand, items of information, which contain at least one assignment for the industrial truck (20), which comprises at least one complex command chain for controlling the industrial truck (20), are provided by means of at least one external signal generator (23) in the surroundings of the industrial truck (20) and, on the other hand, the items of information containing the assignment are acquired by the sensor device (27) of the industrial truck (20) and forwarded to the data processing device, wherein the assignment is extracted from the acquired items of information and input into a control program in the data processing device, and the command chain for controlling the industrial truck (20) is started by the control program, wherein multiple complex command chains are provided, which map individual action strands of the automated industrial truck (20) and are a path tracking (9), a pallet pickup (7), and a pallet delivery (8), wherein the external signal generator (23) is configured as an optical signal generator (23), wherein the external signal generator (23) is centrally controlled, wherein after the processing of the command chain is ended, a subsequent assignment is input.

2. Method according to Claim 1, **characterized in that**, in the case of a command chain that can be completed, which comprises the pallet pickup (7) or the pallet delivery (8), independent processing of the command chain to its end takes place.

3. Method according to Claim 1 or 2, **characterized in that**, in the case of an endless command chain, which comprises the path tracking (9), the processing of the command chain is ended by means of application of an external signal.

4. Method according to any one of Claims 1 to 3, **characterized in that** the external signal generator (23) provides optical items of information.

5. Industrial truck (20) having a control device, comprising a data processing device and configured for the automatic control of the industrial truck (20), and a sensor device (27), which is operationally connected to the data processing device and is designed to acquire external items of information in the surroundings of the industrial truck (20), for carrying out a method according to any one of Claims 1 to 4, wherein the sensor device (27) is configured as an optical sensor, **characterized in that** the data processing device of the control device is configured to extract an assignment comprising a complex command chain for controlling the industrial truck (20) from the items of information acquired by the sensor device (27), to input the assignment into a control program, and to start the command chain to control the industrial truck (20), wherein multiple complex command chains are provided which map individual action strands of the automated industrial truck (20) and are a path tracking (9), a pallet pickup (7), and a pallet delivery (8), wherein the external signal generator (23) is designed as an optical signal generator (23), wherein the external signal generator (23) is centrally controlled.

6. Industrial truck (20) according to Claim 5, **characterized in that** the industrial truck (20) is configured as a forklift or order picking vehicle, in particular as a mobile order picking robot, or tractor or platform truck or tugger train vehicle.

7. Intra-logistics system having at least one automated industrial truck (20) according to Claim 5 or 6, having a control device, comprising a data processing device and configured for the automatic control of the industrial truck (20), and a sensor device (27), which is operationally connected to the data processing device and is designed to acquire external items of information in the surroundings of the industrial truck (20), wherein the sensor device (27) is configured as an optical sensor, and having at least one external signal generator (23) in the surroundings of the industrial truck (20), wherein the external signal generator (23) is configured as an optical signal generator (23), **characterized in that** the external signal generator (23) is configured to provide items of information which contain at least one assignment for the industrial truck (20), which comprises at least one complex command chain for controlling the industrial truck (20), and the data processing device of the control device is configured to extract the assignment from the items of information acquired by the sensor device (27), to input the assignment into a control program, and to start the command chain to control the industrial truck (20), wherein multiple complex command chains are provided which map individual action strands of the automated industrial truck (20) and are a path tracking (9), a pallet pickup (7), and a pallet delivery (8), wherein the external signal generator (23) is centrally controlled, wherein the control program is configured to input a subsequent assignment after ending the processing of the command chain.

8. Intra-logistics system according to Claim 7, **characterized in that** the sensor device (27) is configured as a camera or infrared sensor or laser scanner.

9. Intra-logistics system according to Claim 8, **characterized in that** the optical signal generator (23) is configured as a sign having an ArUco marker (24) .

10. Intra-logistics system according to any one of Claims 7 to 9, **characterized in that** the external signal generator (23) is configured as an intelligent signal generator, in particular as an electronic display screen, which is operationally connected to a central control system, in particular an industrial truck guidance system and/or a product management system.

## Revendications

1. Procédé permettant de faire fonctionner un chariot de manutention automatisé (20) pourvu d'un dispositif de commande comprenant un dispositif de traitement de données pour la commande automatique du chariot de manutention (20) et d'un dispositif de capteur (27) en relation fonctionnelle avec le dispositif de traitement de données pour la détection d'informations externes dans l'environnement du chariot de manutention (20), dans lequel le dispositif de capteur (27) est réalisé sous la forme d'un capteur optique, **caractérisé en ce que** d'une part, au moins un émetteur de signaux externe (23) dans l'environnement du chariot de manutention (20) fournit des informations qui contiennent au moins un ordre pour le chariot de manutention (20) qui comprend au moins une chaîne d'instructions complexe pour commander le chariot de manutention (20), et d'autre part, les informations contenant l'ordre sont détectées par le dispositif de capteur (27) du chariot de manutention (20) et sont transmises au dispositif de traitement de données, dans lequel, dans le dispositif de traitement de données, l'ordre est extrait des informations détectées et est enregistré dans un programme de commande, et le programme de commande lance la chaîne d'instructions pour commander le chariot de manutention (20), dans lequel plusieurs chaînes d'instructions complexes sont prévues qui reproduisent des séquences d'actions individuelles du chariot de manutention automatisé (20) et qui sont un suivi de trajectoire (9), une prise de palette (7) et une dépose de palette (8), dans lequel l'émetteur de signaux externe (23) est réalisé sous la forme d'un émetteur de signaux optique (23), dans lequel l'émetteur de signaux externe (23) est commandé de manière centralisée, dans lequel un ordre suivant est enregistré lorsque le traitement de la chaîne d'instructions est finalisé.

2. Procédé selon la revendication 1, **caractérisé en ce que** dans une chaîne d'instructions pouvant être finalisée qui comprend la prise de palette (7) ou la dépose de palette (8), un traitement autonome de la chaîne d'instructions est effectué jusqu'à la fin de celle-ci.

3. Procédé selon la revendication 1 ou 2, **caractérisé en ce que** dans une chaîne d'instructions sans fin qui comprend le suivi de trajectoire (9), une finalisation du traitement de la chaîne d'instructions est effectuée au moyen de l'application d'un signal externe.

4. Procédé selon l'une quelconque des revendications 1 à 3, **caractérisé en ce que** l'émetteur de signaux externe (23) fournit des informations optiques.

5. Chariot de manutention (20) pourvu d'un dispositif de commande comprenant un dispositif de traitement de données et réalisé pour la commande automatique du chariot de manutention (20) et d'un dispositif de capteur (27) en relation fonctionnelle avec le dispositif de traitement de données pour la détection d'informations externes dans l'environnement du chariot de manutention (20), pour l'exécution d'un procédé selon l'une quelconque des revendications 1 à 4, dans lequel le dispositif de capteur (27) est réalisé sous la forme d'un capteur optique, **caractérisé en ce que** le dispositif de traitement de données du dispositif de commande est conçu pour extraire des informations détectées par le dispositif de capteur (27) un ordre comprenant une chaîne d'instructions complexe pour commander le chariot de manutention (20), pour enregistrer l'ordre dans un programme de commande et pour lancer la chaîne d'instructions pour commander le chariot de manutention (20), dans lequel plusieurs chaînes d'instructions complexes sont prévues qui reproduisent des séquences d'actions individuelles du chariot de manutention automatisé (20) et sont un suivi de trajectoire (9), une prise de palette (7) et une dépose de palette (8), dans lequel l'émetteur de signaux externe (23) est réalisé sous la forme d'un émetteur de signaux optique (23), dans lequel l'émetteur de signaux externe (23) est commandé de manière centralisée.

6. Chariot de manutention (20) selon la revendication 5, **caractérisé en ce que** le chariot de manutention (20) est réalisé sous la forme d'un chariot élévateur ou d'un véhicule de préparation de commandes, en particulier sous la forme d'un robot de préparation de commandes mobile ou d'un tracteur ou d'un chariot à plateforme ou d'un véhicule de petit train logistique.

7. Système intralogistique, comprenant au moins un chariot de manutention automatisé (20) selon la revendication 5 ou 6 pourvu d'un dispositif de commande comprenant un dispositif de traitement de données et réalisé pour la commande automatique du chariot de manutention (20), et d'un dispositif de capteur (27) en relation fonctionnelle avec le dispositif de traitement de données et réalisé pour la détection d'informations externes dans l'environnement du chariot de manutention (20), dans lequel le dispositif de capteur (27) est réalisé sous la forme d'un capteur optique, et comprenant au moins un émetteur de signaux externe (23) dans l'environnement du chariot de manutention (20), dans lequel l'émetteur de signaux externe (23) est réalisé sous la forme d'un émetteur de signaux optique (23), **caractérisé en ce que** l'émetteur de signaux externe (23) est conçu pour fournir des informations qui contiennent au moins un ordre pour le chariot de manutention (20) qui comprend au moins une chaîne d'instructions complexe pour commander le chariot de manutention (20), et le dispositif de traitement de données du dispositif de commande est conçu pour extraire l'ordre des informations détectées par le dispositif de capteur (27), pour enregistrer l'ordre dans un programme de commande et pour lancer la chaîne d'instructions pour commander le chariot de manutention (20), dans lequel plusieurs chaînes d'instructions complexes sont prévues qui reproduisent des séquences d'actions individuelles du chariot de manutention automatisé (20) et sont un suivi de trajectoire (9), une prise de palette (7) et une dépose de palette (8), dans lequel l'émetteur de signaux externe (23) est commandé de manière centralisée, dans lequel le programme de commande est réalisé pour enregistrer un ordre suivant lorsque le traitement de la chaîne d'instructions est finalisé.

8. Système intralogistique selon la revendication 7, **caractérisé en ce que** le dispositif de capteur (27) est réalisé sous la forme d'une caméra ou d'un capteur infrarouge ou d'un scanner laser.

9. Système intralogistique selon la revendication 8, **caractérisé en ce que** l'émetteur de signaux optique (23) est réalisé sous la forme d'une plaque avec un marqueur ArUco (24).

10. Système intralogistique selon l'une quelconque des revendications 7 à 9, **caractérisé en ce que** l'émetteur de signaux externe (23) est réalisé sous la forme d'un générateur de signaux intelligent, en particulier sous la forme d'un écran électronique qui est en relation fonctionnelle avec un système de commande centralisé, en particulier un système de guidage de chariot de manutention et/ou un système de gestion de marchandises.
